# EUROPEAN PATENT APPLICATION

(11) **EP 4 755 527 A1**
(43) Date of publication of application: **10.06.2026**
(21) Application number: 25790603.2
(22) Date of filing: 14.04.2025
(51) Int. Cl.: B05C 5/02, B05C 11/10, H01M 4/04

(54) **DIE COATER**

(30) Priority: 17.04.2024 KR 20240051288
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/005053
(87) International publication number: WO 2025/220990

(57) **Abstract**

The die coater includes a first die including a land part and a manifold, the manifold having a predetermined depth from the land part and configured to accommodate an electrode slurry. The die coater further includes a second die coupled to the first die and a shim interposed between the first die and the second die. The shim includes a spacer shim extending in a first direction and a body shim extending in a second direction perpendicular to the first direction. The spacer shim includes an insulating liquid inlet and first and second insulating flow paths connected to the insulating liquid inlet. The die coater further includes a first regulator configured to adjust an amount of the insulating liquid discharged through the first insulating flow path.

## Description

### [Technical Field]

The present disclosure relates to a die coater.

This application claims the benefit of priority based on Korean Patent Application No. 10-2024-0051288, filed on April 17, 2024, and the entire content of the Korean patent application is incorporated herein by reference.

### [Background]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a coating material containing an active material onto an electrode plate and may be performed by a die coater.

### [Technical Problem]

The present disclosure is directed to providing a die coater with improved coating performance.

### [Technical Solution]

Aspects of the present disclosure provide a die coater. The die coater includes: a first die including a land part and a manifold that has a certain depth from the land part and is configured to accommodate electrode slurry; a second die coupled to the first die; a shim interposed between the first die and the second die and including a spacer shim extending in a first direction and a body shim extending in a second direction perpendicular to the first direction, the spacer shim of the shim including an insulating liquid inlet and first and second insulation flow paths connected to the insulating liquid inlet; and a die coater including a first regulator configured to adjust an amount of an insulating liquid to be discharged through the first insulation flow path.

The first regulator may be a bolt.

The first regulator may be configured to be moved toward the first insulation flow path.

The first regulator may be configured to adjust a cross-sectional area of the first insulation flow path.

The first regulator may be coupled to the second die.

The second die may include a fastening hole overlapping the first insulation flow path.

The first regulator may be configured to adjust a cross-sectional area of the first insulation flow path.

The die coater may further include a second regulator configured to adjust the second insulation flow path.

Aspects provide a method of manufacturing a secondary battery. The method includes adjusting a cross-sectional area of a first insulation flow path of a spacer shim of a shim between a first die and a second die, and providing electrode slurry and insulating slurry onto an electrode sheet.

The cross-sectional area of the first insulation flow path may be adjusted to cause an amount of the insulating slurry to be discharged through the first insulation flow path and an amount of the insulating slurry to be discharged through the second insulation flow path of the spacer shim to be the same.

The first die may include a land part and a manifold, the second die may include a fastening hole overlapping the first insulation flow path, and the cross-sectional area of the first insulation flow path may be adjusted by operating a regulator coupled to the second die.

The regulator may be configured to be moved toward the first insulation flow path.

### [Advantageous Effects]

According to aspects of the present disclosure, cross-sectional areas of insulation flow paths of a spacer shim can be adjusted. Accordingly, uneven discharging of an insulating liquid due to non-uniform insulation flow paths of a spacer can be prevented, and the yield and reliability of a coating process can be improved.

Effects achievable from aspects of the present disclosure are not limited to the above-described effects, and other effects that are not described herein will be clearly derived and understood by those of ordinary skill in the art to which the aspects of the present disclosure pertain from the following description. That is, unintended effects achieved when the aspects of the present disclosure are implemented are derivable by those of ordinary skill in the art from the aspects of the present disclosure.

### [Brief Description of the Drawings]

FIG. 1 illustrates secondary battery manufacturing equipment according to aspects.
FIG. 2 is an exploded perspective view for describing a die coater according to aspects.
FIG. 3 illustrates a part of FIG. 2
FIG. 4 illustrates a part of FIG. 2.
FIG. 5 illustrates a part of FIG. 2.
FIG. 6 is a cross-sectional view of a die coater according to aspects.
FIG. 7 illustrates a layout of spacer shims and a regulator.
FIG. 8 is a flowchart of a secondary battery manufacturing method according to aspects.

### [Detailed Description]

Hereinafter, aspects of the present disclosure will be described in detail with reference to the accompanying drawings. Before describing aspects of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, aspects set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because aspects of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Aspect)

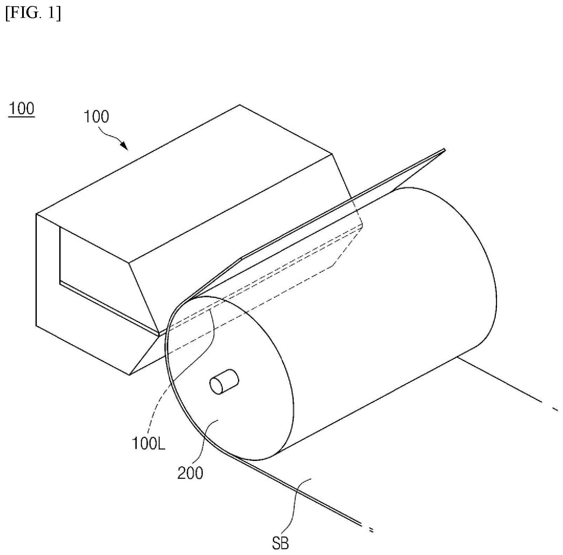

FIG. 1 illustrates secondary battery manufacturing equipment 10 according to aspects.

According to aspects, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to aspects, the die coater 100 may be configured to apply the coating material onto a current collector SB. The coating material may include electrode slurry and insulating slurry. The die coater 100 may be configured to simultaneously provide the electrode slurry and the insulating slurry on the current collector SB.

The electrode slurry may be used to manufacture an electrode of a secondary battery. The electrode slurry may include an electrode active material, a conductive additive, a binder, and a solvent. The electrode slurry may be prepared by dissolving the electrode active material, the conductive additive, the binder, etc. in the solvent. The solvent may disperse the electrode active material and the like. The solvent may be an aqueous solvent or a nonaqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the electrode slurry. Parameters that determine the amount of the solvent to be used include a thickness to which the electrode slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}CO_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤ 1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive additive may have conductivity without causing a chemical change in a finally manufactured secondary battery. For example, the conductive additive may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force with respect to an electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A thickness of a positive electrode current collector may be in a range of about 3 µm to about 500 µm. The positive electrode current collector may have high conductivity without causing a chemical change in a finally manufactured secondary battery. The positive electrode current collector may include, for example, stainless steel, nickel, titanium, baked carbon, or aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of a film, sheet, foil, net, porosity, foam or non-woven fabric.

A thickness of a negative electrode current collector may be in a range of about 3 µm to about 500 µm. The negative electrode current collector may have high conductivity without causing a chemical change in a finally manufactured secondary battery. The negative electrode current collector may include copper, stainless steel, aluminum, nickel, titanium, baked carbon, or aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of a film, sheet, foil, net, porosity, foam or non-woven fabric.

### (Second aspect)

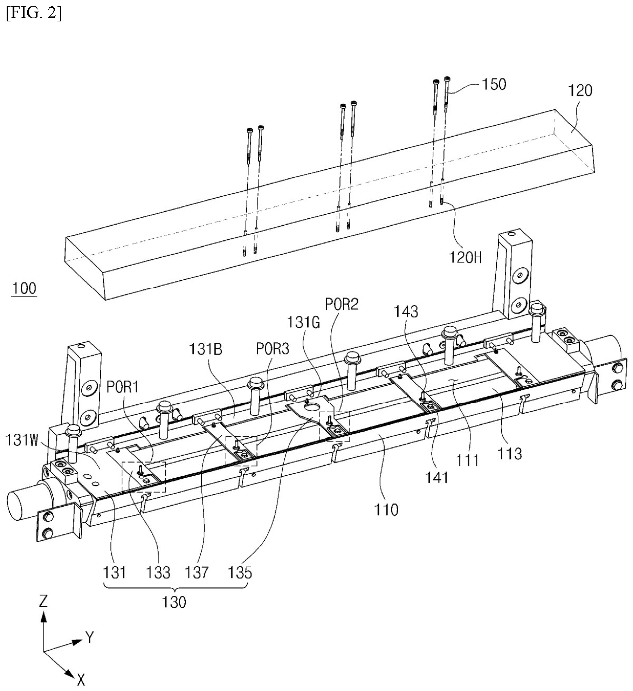

FIG. 2 is an exploded perspective view for describing a die coater 100 according to aspects.

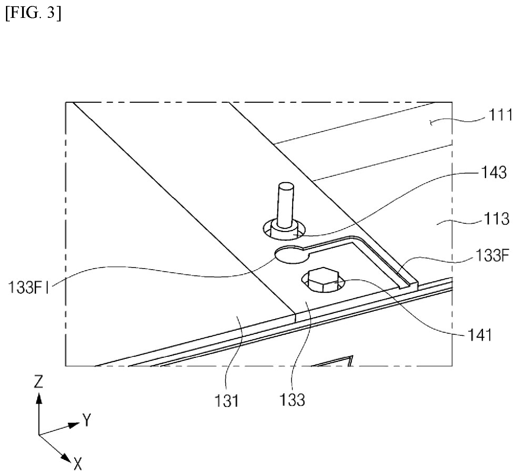

FIG. 3 illustrates a part POR1 of FIG. 2.

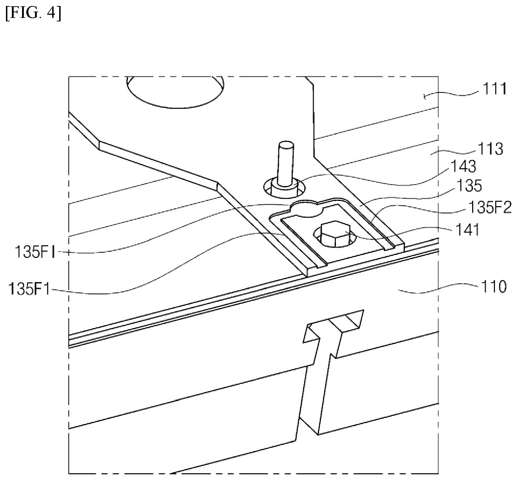

FIG. 4 illustrates a part POR2 of FIG. 2.

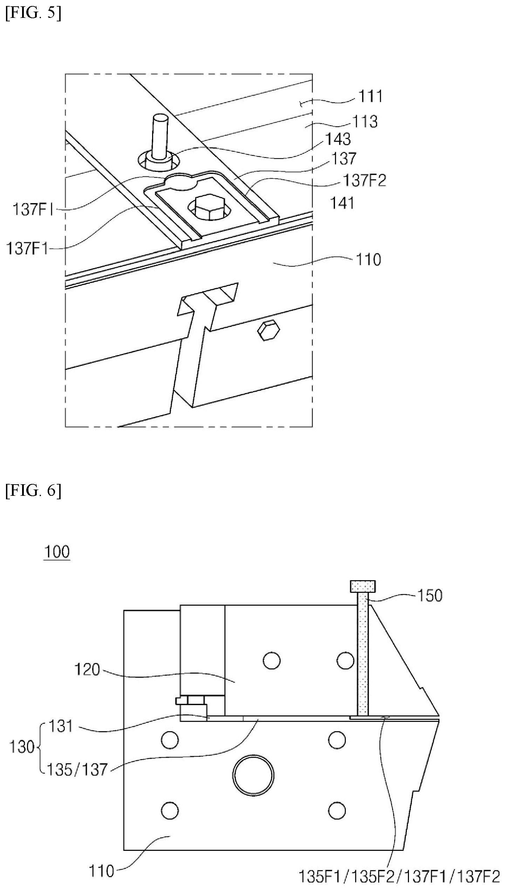

FIG. 5 illustrates a part POR3 of FIG. 2.

FIG. 6 is a cross-sectional view of the die coater 100 according to aspects.

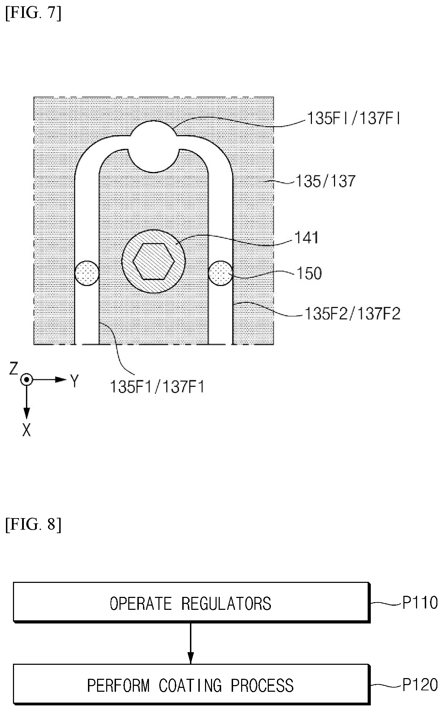

FIG. 7 illustrates a layout of spacer shims 135 and 137 and a regulator 150.

Referring to FIG. 2, the die coater 100 may include a first die 110, a second die 120, a shim 130, shim fixing devices 141, shim fixing pins 143, and regulators 150.

Hereinafter, the technical idea of the present disclosure will be described with respect to an aspect in which the first die 110 and the second die 120 are separate elements as described above. Based on the description herein, technicians of ordinary skill in the art will be able to easily derive an aspect in which the first die 110 and the second die 120 are integrated to form an integral die.

The first die 110 may include a manifold 111 and an electrode slurry supply path connected to the manifold 111. Electrode slurry may flow into the manifold 111 through the electrode slurry supply path. The manifold 111 may be an empty space configured to accommodate the electrode slurry. After the manifold 111 is filled with the electrode slurry, the electrode slurry may be discharged to the outside of the die coater 100. The electrode slurry may be discharged from the manifold 111 to the outside through slits defined by the shim 130 and a land part 113.

The manifold 111 may have a well shape with a certain depth from the land part 113. The manifold 111 may include an inclined surface and thus the electrode slurry may be stably discharged from the die coater 100.

The shim 130 may be interposed between the first die 110 and the second die 120. The first die 110 may be in contact with a lower surface of the shim 130. The second die 120 may be in contact with an upper surface of the shim 130. The shim 130 may include a body shim 131 and spacer shims 133, 135 and 137.

The body shim 131 may include a body 131B and wings 131W. The body 131B may extend in a Y-axis direction. The body 131B may be a plate whose width in an X-axis direction is less than a length thereof in the Y-axis direction. Here, the X-axis direction may be a direction in which the electrode slurry is discharged, and the Y-axis direction may be substantially perpendicular to the X-axis direction. The body shim 131 may be substantially parallel to each of the X-axis direction and the Y-axis direction and be substantially perpendicular to a Z-axis direction. The wings 131W may be connected to an end portion of the body 131B in the Y-axis direction. The wings 131W may protrude from the body 131B in the X-axis direction.

The body 131B may include a plurality of grooves 131G. Each of the plurality of grooves 131G may be in a side of the body 131B adjacent to the manifold 111 (e.g., a side of the body 131B overlapping the manifold 111) among sides of the body 131B parallel to the Y-axis direction. Each of the plurality of grooves 131G may be recessed inward from the sides of the body 131B parallel to the Y-axis direction.

The plurality of grooves 131G may correspond to the spacer shims 133, 135 and 137. The plurality of grooves 131G may expose a portion of the first die 110. The plurality of spacer shims 133, 135 and 137 may be partially inserted into a corresponding one of the plurality of grooves 131G. The plurality of spacer shims 133, 135 and 137 may be fixed to the portion of the first die 110 exposed via the plurality of grooves 131G by a method such as bolting.

According to aspects, a width of each of the plurality of grooves 131G in the Y-axis direction may be different from a width of the corresponding one of the spacer shims 133, 135 and 137 in the Y-axis direction. According to aspects, the width of each of the plurality of grooves 131G in the Y-axis direction may be greater than the width of the corresponding one of the spacer shims 133, 135 and 137 in the Y-axis direction. Accordingly, the plurality of grooves 131G may not only guide the coupling of the spacer shims 133, 135 and 137 but also provide a degree of freedom to the spacer shims 133, 135 and 137 in the Y-axis direction, so that positions of the spacer shims 133, 135 and 137 may be precisely adjusted in the Y-axis direction.

The spacer shims 133, 135 and 137 may be interposed between the wings 131W in the Y-axis direction. The spacer shims 133, 135 and 137 may overlap the wings 131W in the Y-axis direction.

Referring to FIGS. 2 and 3, according to aspects, the spacer shims 133 may be adjacent to edges of the shim 130 in the Y-axis direction. According to aspects, the spacer shims 133 may be adjacent to the wings 131W. According to aspects, the spacer shims 133 may be in contact with the wings 131W but aspects are not limited thereto. Each of the spacer shims 133 may be referred to as an edge spacer shim or a first spacer shim.

Each of the spacer shims 133 may include an inlet 133FI and an insulation flow path 133F. The insulation flow path 133F may be connected to the inlet 133FI. The first die 110 may be connected to an insulating slurry supply line, and the insulating slurry flowing through a path in the first die 110 may be introduced into the insulation flow path 133F through the inlet 133FI. The inlet 133FI may have a larger width than the insulation flow path 133F to supply the insulating slurry stably. The insulation flow path 133F may provide a path for discharging the insulating slurry. Here, the insulating slurry may be a material having insulation performance and fluidity.

The insulating slurry may be provided onto the current collector SB (see FIG. 1) through the insulation flow path 133F and thus may be provided to cover an edge of the electrode slurry discharged from portions of the manifold 111 between the spacer shims 133 and the spacer shims 137. According to aspects, the insulating slurry may cover the edge of the electrode slurry, thus improving an edge profile of the electrode slurry the yield and reliability of a secondary battery manufacturing process. Each of the spacer shims 133 may match one slit for discharging the electrode slurry and thus each of the spacer shims 133 may include one insulation flow path 133F.

Referring to FIGS. 2 and 4, according to aspects, the spacer shim 135 may be disposed on a central part of the shim 130 in the Y-axis direction. According to aspects, the spacer shim 135 may be interposed between the spacer shims 133. The spacer shim 135 may be referred to as a center spacer shim or a second spacer shim.

The spacer shim 135 may include an inlet 135FI and first and second insulation flow paths 135F1 and 135F2. The first and second insulation flow paths 135F1 and 135F2 may be connected to the inlet 135FI. The insulating slurry may be introduced into the first and second insulation flow paths 135F1 and 135F2 through the inlet 135FI. The inlet 135FI may have a width greater than that of each of the first and second insulation flow paths 135F1 and 135F2 to stably supply the insulating slurry. The first and second insulation flow paths 135F1 and 135F2 may provide a path for the flow of the insulating slurry.

The insulating slurry may be provided onto the current collector SB (see FIG. 1) through the first and second insulation flow path 135F1 and 135F2 and thus may be provided to cover an edge of the electrode slurry discharged from portions of the manifold 111 between the spacer shim 135 and the spacer shims 137. The spacer shim 135 may match two slits for discharging the electrode slurry, and accordingly, the spacer shim 135 may include the two insulation flow paths 135F1 and 135F2.

Referring to FIGS. 2 and 5, according to aspects, the spacer shims 137 may be interposed between the spacer shims 133 and the spacer shim 135. Each of the spacer shims 137 may be referred to as an intermediate spacer shim or a third spacer shim.

Each of the spacer shims 137 may include an inlet 137FI and first and second insulation flow paths 137F1 and 137F2. The first and second insulation flow paths 137F1 and 137F2 may be connected to the inlet 137FI. The insulating slurry may be introduced into the first and second insulation flow paths 137F1 and 137F2 through the inlet 137FI. The inlet 137FI may have a width greater than that of each of the first and second insulation flow paths 137F1 and 137F2 to stably supply the insulating slurry. The first and second insulation flow paths 137F1 and 137F2 may provide a path for the flow of the insulating slurry.

The insulating slurry may be provided onto the current collector SB (see FIG. 1) through the first and second insulation flow paths 137F1 and 137F2 and thus may be provided to cover an edge of the electrode slurry discharged from a portion of the manifold 111 between the spacer shim 133 and the spacer shim 137 and a portion of the manifold 111 between the spacer shim 135 and the spacer shim 137. Each of the spacer shims 137 may match two slits for discharging the electrode slurry and thus may include the two insulation flow paths 137F1 and 137F2.

The spacer shims 133, 135 and 137 may partially cover the manifold 111. The spacer shims 133, 135 and 137 may overlap the manifold 111 in the Z-axis direction. In FIG. 3, the spacer shims 133, 135 and 137 may divide the manifold 111 into four regions and thus the die coater 100 may be configured to form four coated lanes simultaneously by performing the coating process once.

Technicians of ordinary skill in the art will be able to easily derive a die coater configured to form various numbers of coated lanes, e.g., one, two, eight, sixteen or thirty two coated lanes, based on the description herein. For example, a die coater configured to form eight coated lanes may include a shim that includes two edge spacer shims, one center spacer shim, and six intermediate spacer shims.

Referring to FIGS. 2 to 5, the shim fixing devices 141 and the shim fixing pins 143 may be partially inserted into the land part 113 of the first die 110. The shim fixing devices 141 and the shim fixing pins 143 may be configured to fix the spacer shims 133 to the land part 113 of the first die 110.

The shim fixing devices 141 may be, for example, bolts but are not limited thereto. The shim fixing pins 143 may be, for example, bidirectional pins. Accordingly, the shim fixing pins 143 may be configured to fix the second die 120 together with the shim 130, in addition to the first die 110. Each of the spacer shims 133, 135 and 137 may include fastening holes corresponding to the shim fixing devices 141 and the shim fixing pins 143 (i.e., fastening holes into which the shim fixing devices 141 and the shim fixing pins 143 are inserted and which are penetrated by the shim fixing devices 141 and the shim fixing pins 143).

Referring to FIGS. 2, 6, and 7, the regulators 150 may be coupled to the second die 120. The regulators 150 may be inserted into the second die 120. According to aspects, the regulators 150 may be mechanical fastening means such as bolts, and the second die 120 may include fastening holes 120H into which the regulators 150 are inserted. The fastening holes 120H may include screw threads. Each of the fastening holes 120H may overlap any one of the first and second insulation flow paths 135F1 and 135F2 and the first and second insulation flow paths 137F1 and 137F2 in the Z-axis direction.

The regulators 150 may be configured to be moved in the Z-axis direction by manipulation such as bolting. The regulators 150 may be configured to be moved close to or away from one of the first and second insulation flow paths 135F1 and 135F2 and the first and second insulation flow paths 137F1 and 137F2. Accordingly, the regulators 150 may be configured to adjust a flow area of a corresponding one of the first and second insulation flow paths 135F1 and 135F2 and the first and second insulation flow paths 137F1 and 137F2.

The flow areas of the first and second insulation flow paths 135F1 and 135F2 and the first and second insulation flow paths 137F1 and 137F2 may be defined by the spacer shims 135 and 137 and the regulators 150. As the regulators 150 are moved toward the first and second insulation flow paths 135F1 and 135F2 and the first and second insulation flow paths 137F1 and 137F2, the flow areas of the first and second insulation flow paths 135F1 and 135F2 and the first and second insulation flow paths 137F1 and 137F2 may decrease. As the regulators 150 are moved to be away from the first and second insulation flow paths 135F1 and 135F2 and the first and second insulation flow paths 137F1 and 137F2, the flow areas of the first and second insulation flow paths 135F1 and 135F2 and the first and second insulation flow paths 137F1 and 137F2 may increase.

Although the spacer shims 135 and 137 are produced through a precise manufacturing process, an inevitable error may occur in the first and second insulation flow paths 135F1 and 135F2 and the first and second insulation flow paths 137F1 and 137F2.

The difference between the flow areas of the first and second insulation flow paths 135F1 and 135F2 and the difference between the flow areas of the first and second insulation flow paths 137F1 and 137F2 may cause a deviation in an insulation thickness applied to an edge portion of the electrode slurry and decrease the reliability of the manufacture of a secondary battery.

According to aspects, a manufacturing error of the spacer shims 135 and 137 may be compensated for by adjusting the flow areas of the first and second insulation flow paths 135F1 and 135F2 and the first and second insulation flow paths 137F1 and 137F2 by the regulators 150, thereby improving the reliability of the manufacture of a secondary battery.

Technicians of ordinary skill in the art will be able to easily derive an aspect in which only some of the regulators 150 are provided, based on the description herein. For example, the regulators 150 may be provided to only one of the first and second insulation flow paths 135F1 and 135F2 of the spacer shim 135 or only one of the first and second insulation flow paths 137F1 and 137F2 of each of the spacer shims 137.

As shown in FIG. 2, when the shim 130 includes two intermediate spacer shims and one center spacer shim, there are three cases in which at least one of the regulators 150 is matched to each of the intermediate spacer shims and three cases in which at least one of the regulators 150 is matched to the center spacer shim, and thus, there are twenty-six additional modifications, in addition to FIG. 2.

### (Third Aspect)

FIG. 8 is a flowchart of a secondary battery manufacturing method according to aspects.

Referring to FIGS. 1, 2, and 8, in P110, the regulators 150 may be operated. The regulators 150 may be operated to be moved toward the land part 113 exposed via the first and second insulation flow paths 135F1 and 135F2 and the first and second insulation flow paths 137F1 and 137F2. By operating the regulators 150, cross-sectional areas of flow paths of the first and second insulation flow paths 135F1 and 135F2 and the first and second insulation flow paths 137F1 and 137F2 may be adjusted.

The cross-sectional areas of the first and second insulation flow paths 135F1 and 135F2 may be adjusted such that a discharge amount of the insulating slurry through the first insulation flow paths 135Fl is the same as a discharge amount of the insulating slurry through the second insulation flow paths 135F2. Similarly, the cross-sectional areas of the first and second insulation flow paths 135F1 and 135F2 may be adjusted such that an amount of the insulating slurry discharged through the first insulation flow paths 135F1 is the same as an amount of the insulating slurry discharged through the second insulation flow paths 135F2.

Next, in P120, the coating process may be performed. The coating process is substantially the same as that described above with reference to FIG. 1 and thus redundant description thereof is omitted here.

After the coating process is performed, a roll press process, a drying process, a slitting process, and a notching process may be performed. The roll press process may be performed by roll press equipment including pressing rolls. By performing the roll press process, a bonding force between a surface of an electrode plate and an active material may be enhanced. Therefore, the movement of lithium ions in an electrode may be promoted, and an output and performance of a finally manufactured secondary battery may be improved.

A drying process of the electrode may include supplying dry air into a drying chamber or supplying heat energy to the electrode in a chamber through infrared rays, high-temperature air or the like. In the drying process, the uniformity and reliability of the electrode may be improved by removing moisture from the electrode.

The slitting process is a process of dividing the electrode into a plurality of electrodes having a smaller width in a transverse direction. Thereafter, the electrode may be cut into a shape with a tab by the notching process.

The present disclosure has been described above in more detail with reference to the drawings, the aspects, etc. However, the configurations illustrated in the drawings or aspects described in the present specification are only examples of the present disclosure and do not reflect all the technical ideas of the present disclosure and thus it should be understood that various equivalents and modifications that replace the configurations would have been made at the filing date of the present application.

## Claims

**1.** A die coater, comprising:
a first die including a land part and a manifold, the manifold having a predetermined depth from the land part and configured to accommodate an electrode slurry;
a second die coupled to the first die;
a shim interposed between the first die and the second die, the shim including a spacer shim extending in a first direction and a body shim extending in a second direction perpendicular to the first direction, the spacer shim including an insulating liquid inlet and first and second insulation flow paths connected to the insulating liquid inlet; and
a first regulator configured to adjust an amount of an insulating liquid discharged through the first insulation flow path.

**2.** The die coater of claim 1, wherein the first regulator is a bolt.

**3.** The die coater of claim 1, wherein the first regulator is configured to move towards the first insulation flow path.

**4.** The die coater of claim 1, wherein the first regulator is configured to adjust a cross-sectional area of the first insulation flow path.

**5.** The die coater of claim 1, wherein the first regulator is coupled to the second die.

**6.** The die coater of claim 1, wherein the second die includes a fastening hole overlapping the first insulation flow path.

**8.** The die coater of claim 1, further comprising a second regulator configured to adjust the second insulation flow path.

**9.** A method of manufacturing a secondary battery, comprising:
adjusting a cross-sectional area of a first insulation flow path of a spacer shim of a shim between a first die and a second die; and
providing an electrode slurry and an insulating slurry onto an electrode sheet.

**10.** The method of claim 9, wherein, in the step of adjusting, the cross-sectional area of the first insulation flow path is adjusted to cause an amount of the insulating slurry discharged through the first insulation flow path and an amount of the insulating slurry discharged through a second insulation flow path of the spacer shim to be the same.

**11.** The method of claim 9, wherein the first die includes a land part and a manifold,
the second die includes a fastening hole overlapping the first insulation flow path, and
wherein, in the step of adjusting, the cross-sectional area of the first insulation flow path is adjusted by operating a regulator coupled to the second die.

**12.** The method of claim 11, wherein the regulator is configured to move towards the first insulation flow path.
